Europäisches Patentamt

European Patent Office

Office européen des brevets

(11) Publication number: **0 496 422 A2**

# EUROPEAN PATENT APPLICATION

(21) Application number: **92101184.7**

(22) Date of filing: **24.01.92**

(51) Int. Cl.5: **G06F 3/14**

(30) Priority: **25.01.91 JP 7672/91**
**25.06.91 JP 48044/91 U**

(43) Date of publication of application:
**29.07.92 Bulletin 92/31**

(84) Designated Contracting States:
**DE FR GB**

(71) Applicant: **Shinko Electric Co. Ltd.**
**12-2, Nihonbashi 3-chome**
**Chuo-ku Tokyo 103(JP)**

(72) Inventor: **Shimomura, Shinzo, c/o Ise Factory**
**Shinko Electric Co., Ltd., 100,**
**Takegahana-cho**
**Ise-shi, Mie-ken 516(JP)**

(74) Representative: **Goddar, Heinz J., Dr. et al**
**FORRESTER & BOEHMERT**
**Franz-Joseph-Strasse 38**
**W-8000 München 40(DE)**

(54) Video terminal switching device and video signal branching device.

(57) First aspect of the invention comprises a video terminal switching device in a plurality of video terminals (VT1, VT2) which are serially connected to each other and each comprising terminal controllers (22, 24), video monitors (23, 25), video monitors (23, 25), switching devices composed of selector switches (26, 28), transmit-receive circuits (33, 34) and a video signal processor (21) wherein the controllers (22, 24) issue a video signal, the selector switches (26, 28) can select, upon reception of a command signal issued by the video signal processor, (21) the video signal issued by a self terminal (VT1, VT2) is relayed to be issued by the controllers (22, 24) in self video terminals (VT1, VT2) or a video signal issued by controllers in non-self downstream video terminals and relay the selected video signal to upstream video terminals (VT) and the transmit-receive circuits (33, 34) receive and send the command signal from the video signal processor (31) for switching the selector switches (26, 28), characterized in that the video terminal further comprises video amplifier (27, 29) connectors to output terminals of the terminal controllers (22, 24) and each having transmission compensation function, the video signal issued by the terminal controllers (22, 24) are relayed to the upstream video terminals by way of the video amplifiers (27, 29) and the selector switches (26, 28) and the video monitors are con-

nected to the output terminals of the terminal controllers (22, 24). Second aspect of the invention comprises a video signal branching device in a video terminal for branching a video signal, which is to be transmitted to a CRT display, into another device, the video signal branching device comprising a basic circuit unit (50) composed of a plurality of basic modules (X) and an option circuit unit (60) comprising a plurality of option modules (Y2 to Y5), characterized in that the basic module (X) comprises an input circuit composed of one input connector (51), one module connecting connector (52P) to be connected to the input connector (51), a terminal resistor (53) and a switch (54) to be ON or OFF to prevent the reflective signal from generating at the input terminal of the CRT display, and a branching output circuit composed of an amplifier (55) having a cable compensation function and one outputting connector (56) for outputting an amplified signal, and the option module composed of a module connecting connector (70) capable of connecting the module connecting connector (52Q) of the input circuit to an outputting connector (61) for connecting to the CRT display.

EP 0 496 422 A2

The present invention relates to a video terminal switching device for selecting a given video terminal among a plurality of video terminals and a signal issued by the thus selected video terminal to a video signal processor such as a video hard copy device, and video signal branching devices for branching the video signal, which is to be transmitted to a cathod ray tube (hereinafter referred to as a CRT) in the video terminal, into other video terminals.

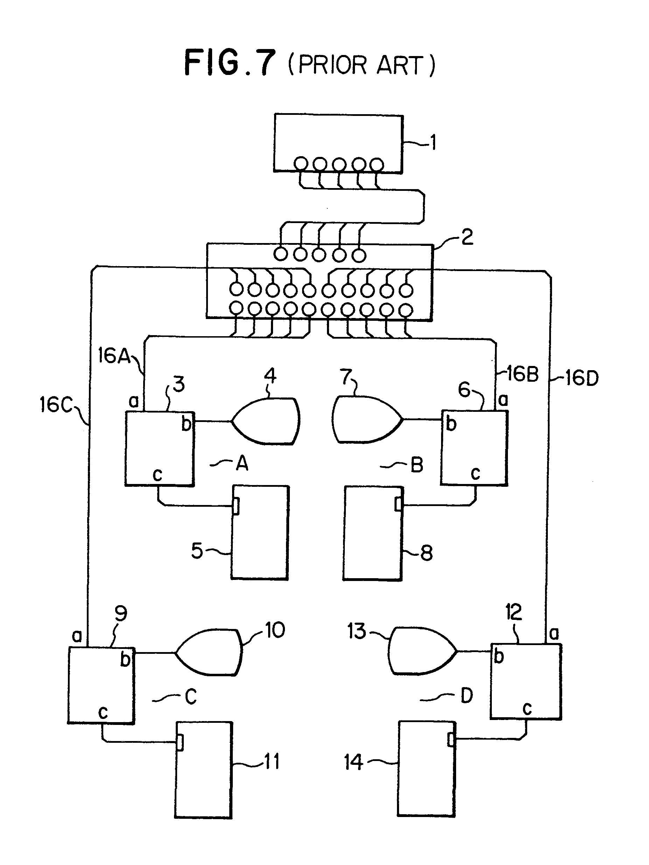

A conventional video terminal switching device of this type is illustrated in Fig. 7.

In the same figure, designated at 1 is a video signal processor such as a video hard copy device (video printer), etc, 2 is a four-channel multiplexer, 3 is a video signal branching device, 4 is a video monitor (CRT display), 5 is a video terminal controller wherein the video signal branching device 3, the video monitor 4 and the video terminal controller 5 constitute a first video terminal A. In the same way, a video signal branching device 6, a video monitor (CRT display) 7 and a video terminal controller 8 constitute a second video terminal B. Likewise, a video signal branching device 9, a video monitor (CRT display) 10, and a video terminal controller 11 constitute a third video terminal C while a video terminal branching device 12, a video monitor (CRT display) 13, and a video terminal controller 14 constitute a fourth video terminal D.

Each of the scattered video terminals A to D is connected to the multiplexer 2 by way of video cables 16A to 16D. Each of the video signal branching devices 3, 6, 9 and 12 receives one group signal composed of five signals supplied by the controllers 5, 8, 11 and 14 of each of the video termimnals A, B, C and D by way of each input terminal c and supplies the one group signal to each of the video monitors 4, 7, 10 and 13 and also supplies the same signal to each of the video cables 16A to 16D by way of each external output terminal a. The multiplexer 2 selects one group video signal requested by one of the video terminals A to D among four groups of video signals respectively input by way of the video cables 16A to 16D and supplies the selected one group of signal to the video printer 1. Each group of the video signals comprises a red signal, a green signal, a blue signal, a horizontal synchronous signal and a vertical synchronous signal.

However, the conventional video terminal switching device as illustrated in Fig. 7 has the following problems. That is, a cable wiring is complex since the video cables should be extended from each of the video terminals A to D to one multiplexer 2. Since the number of groups of the video signals to be connected to one multiplexer 2 is limited, if the number of the video terminal increases, a plurality of multiplexers are required, which involves high costs and much space. If the video terminal has no signal branching function, the video signal branching device should be additionally installed.

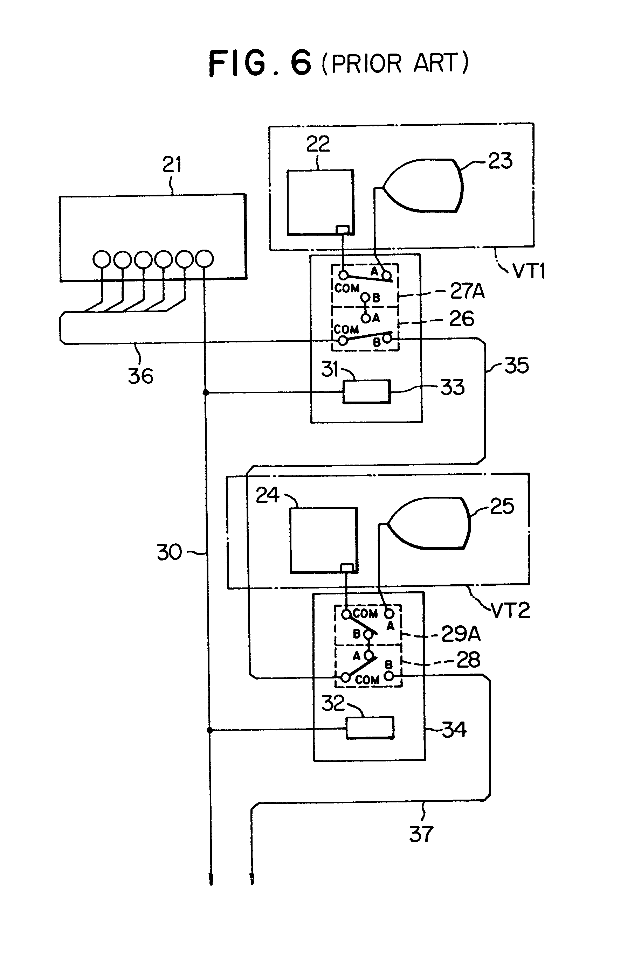

To solve the problems set forth above, the applicant of the present invention proposed a video terminal switching device as illustrated in Fig. 6.

In the same figure, designated at 21 is a video signal processor, 22 and 23 are a controller and a video monitor of a video terminal VT1 which is located upstream while 24 and 25 are a controller and a video monitor of a video terminal VT2 which is located downstream. Video signal switching control circuits 33 and 34 are connected to the video terminals VT1 and VT2 and are serially connected with each other by a video cable 35.

The video signal swithing control circuit 33 comprises a transmit-receive circuit 31 provided with a process request switch and selector switches 27A and 26. The selector switch 27A is normally switched to an A contact point (monitor 23 side) while the selector switch 26 is normally switched to a B contact point (monitor 25 side) so that the video cable 35 is connected to a video cable 36 extending from the video signal processor 21 to the video terminal VT1. The transmit-receive circuit 31 is connected a serial bidirectional transmission cable 30 which extends from the video signal processing device 21 to the downstream thereof in which the transmit-receive circuit 31 can transmit a process request signal, which is issued when a process request switch is turned on, to the video signal processor 21 by way of the serial bidirectional transmitting cable 30 and can receive a selection command from the video signal processor 21. The transmit-receive circuit 31 controls, upon reception of the selection command from the video signal processor 21, to switch the selector switches 27A and 26 to the contact points B and A so that the controller 22 is disconnected from the video monitor 23 and the video cable 35 is disconnected from the video cable 36 whereby the controller 22 is connected to the video cable 36 by way of the selector switches 27A and 26.

The video signal swithing control circuit 34 comprises a transmit-receive circuit 32 provided with a process request switch and selector switches 29A and 28. The selector switch 29A is normally switched to an A contact point (monitor 23 side) while the selector switch 28 is normally switched to a B contact point (monitor 25 side) so that the video cable 37 is connected to a video cable 35 extending from the video terminal VT1. The video cable 37 extends to a transmit-receive circuit of a succeeding video terminal, not shown. The transmit-receive circuit 32 is connected to a serial bidirectional transmitting cable 30 which extends from the video signal processing device 21 to the downstream thereof in which the transmit-receive circuit 32 can transmit a process request signal, which is issued when a process request switch is turned on, to the video signal processor 21 by way of the serial bidirectional transmission cable 30 and can receive a selection command from the video signal processor 21. The transmit-receive circuit 32 controls, upon reception of the selection command from the video signal processor 21, to switch the selector switches 29A and 28 to the contact points B and A so that the controller 24 is disconnected from the video monitor 25 and the video cable 37 is disconnected from the video cable 35 whereby the controller 24 is connected to the video cable 35 by way of the selector switches 29A and 28.

An address code is assigned to each of the video signal switching control circuits 33 and 34. When the process request signal are issued from the transmit-receive circuit 31 or 32, the video signal processor 21 decodes the process request signal and supplies the selection command to the addressor of the process request signal, i.e. to the transmit-receive circuit 31 or 32 by way of the serial bidirectional transmission cable 30. It is a matter of course that the video signal processor 21 can directly specify one of the video terminals and supply the selection command to the specified video terminal. When the video signal switching control circuit 33 or 34, which supplied the process request signal, receive the selection signal addressed thereto, the video signal switching control circuit 33 or 34 supplies the video signal to the video signal processor 21 by way of the video cable 36. Fig. 6 shows the state where the video signal switching circuit 34 receives the selection command and supplies the video signal to the video signal processor 21.

In the arrangement of the video terminal switching device as illustrated in Fig. 6, the video terminal, which is serially connected to the succeeding video terminal, supplies the video signal to the video signal processor 21 by way of the selector switch of the video terminal located upstream when it requests the video signal processor 21 to supply the video signal and such request is permitted. Since the arrangement does not employ the multiplexer 2 and the branching device, there is no concentration of the video cables to one device so that the cable wiring is simplified. Furthermore, the video terminal can be extended by sequential tandem connection thereof to the extent that the video signal processor 21 can control thereof.

However, in the arrangement as illustrated in Fig. 6, since the video terminals are sequentially lengthwise connected by the video cable, there is a likelihood that the distance between the video terminal located most downstream and the video signal processor 21 extends by 100 meter. In such a case, the video signal supplied by the video terminal located most downstream is deteriorated in the frequency characteristic thereof in the course of supply to the video signal processor 21 so that the quality of the image, which is printed out by the video signal processor 21, is liable to be deteriorated. Furthermore, there is a disadvantage that the video monitor is disconnected from the controller in the video terminal which supplies the video signal to video signal processor 21 while the latter is operated.

In the video terminals A to D as illustrated in Fig. 7, in case that the video signal, which is to be supplied to the CRT display, is branched to the video signal processor, the output terminal of the CRT display, if any, can be used. However, if the CRT display is not provided with such output terminal, the video signal should be branched to the video hard copy by providing the video branching devices 3, 6, 9 and 12 as illustrated in Fig. 7.

If the input connector of the CRT display is of a BNC type and the video signal to be supplied is of a standard signal type, the video signal is supplied as an analog signal under the impedance control. However, there are such cases that the input connector of the CRT display is not of the BNC type, reflection wave is generated at an input of the CRT display when the CRT display receives the video signal, the video signal is the one other than the analog level such as TTL level or ECL level. Furthermore, there is a demand that the branched signal is to be supplied for a long distance.

Although it is possible to technically manufacture an adapter which is adapted for each case, employment of such adapter is impractical since the kinds of adapters increase and it is troublesome in view of manufacture and administration thereof and also in view of incorporation of the branched circuit thereinto.

It is a first object of the present invention to provide a video terminal switching device which is capable of extending easily the video terminals without deteriorating the quality of the video signal, which is received from the video terminal to the video signal processor, and capable of supplying the video signal to the video signal processor without disconnecting the video monitor from the controller.

It is a second object of the present invention to provide a video signal branching device which is capable of easily branching all kinds of video signals, without deteriorating the quality thereof by merely selecting an option circuit unit, which is adapted for the type of video signal to be supplied to the CRT display, connecting the selected option circuit unit to a basic circuit unit.

Fig. 1 is a block diagram of a video terminal switching device and a video signal branching device according to a first embodiment of the present invention;

Fig. 2 is a perspective view showing a video terminal switching device and a video signal branching device according to a second embodiment of the present invention;

Fig. 3 is a circuit diagram showing a basic module of the arrangement of Fig. 2;

Fig. 4 is a circuit diagram showing an option module of the arrangement of Fig. 2;

Fig. 5 is a perspective view of a modified embodiment of Fig. 2;

Fig. 6 is a block diagram showing a conventional video terminal switching device; and

Fig. 7 is a block diagram showing another conventional video terminal switching device.

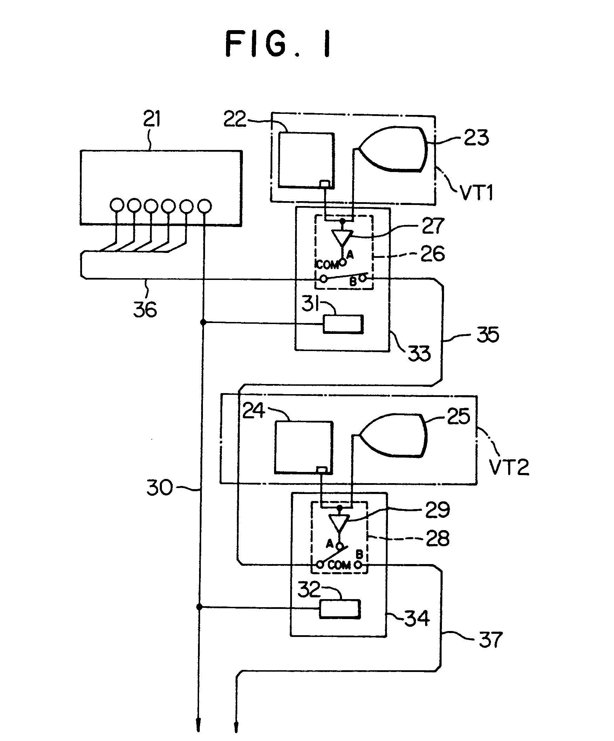

A video terminal switching device and a video signal branching device according to a first embodiment of the present invention will be described with reference to Fig. 1.

In the same figure, a video signal control circuit 33 of a video terminal VT1 has, instead of the selector switch 27A in Fig. 6, a video amplifier 27 an output terminal of which is connected to a contact point A of a selector switch 26 (e.g. a relay switch). An output terminal of a video terminal controller 22 is connected to an input terminal of the video amplifier 27 and also to an input terminal of a video monitor 23. Likewise, a video signal control circuit 34 of a video terminal VT2 has, instead of a selector switch 29A in Fig. 6, a video amplifier 29 an output terminal of which is connected to a contact point A of a selector switch 28 (e.g. a relay switch). An output terminal of a video terminal controller 24 is connected to an input terminal of the video amplifier 29 and also to an input terminal of a video monitor 25. The video amplifiers 27 and 28 have respectively high input impedance and transmission compensation function. The other components thereof are the same as those as illustrated in Fig. 6.

In the arrangement of Fig. 1, if a process request switch of a transmit-receive circuit 32 of the video signal switching control circuit 34 is turned on, the process request signal is supplied to the video signal processor 21 by way of a transmission cable 30. The video signal processor 21 decodes that the addressor of the process request signal is the video terminal VT2 and supplies a selection command addressing to the video terminal VT2 to the transmission cable 30. The transmit-receive circuit 32 decodes that the selection command is addressed to the video terminal VT2 and controls to switch the selector switch 28 to the contact A. The video signal, which is supplied by the video terminal controller 24, is amplified by the video amplifier 29 and supplied to the video cable 35 by way of the selector switch 28. The video signal thus supplied to the video cable 35 is supplied to the video signal processor 21 through the selector switch 26 of the video signal switching control circuit 33 and the video cable 36. Although the video signal is supplied from the video terminal controller 24 to the video signal processor 21, the same video signal is also supplied to the video monitor 25 so that the video signal can be displayed on a screen of the video monitor 25.

According to the first embodiment, the video signal which is to be supplied from each controller of the video terminals to the video signal processor, is first supplied to the video amplifier and then to the video cable. Since the video amplifier has the transmission compensation function, for example, the video signal supplied by the video terminal, which extends by 100 meter from the video terminal, can be supplied to the video signal processor 21 without involving any deterioration of the frequency characteristic. Furthemore,it is possible to prevent the quality of image, which is to be printed out by the video signal processor 21, from being deteriorated.

Still furthermore, since the video signal is directly supplied from each video terminal controller to each video monitor using each video amplifier having high input impedance, the image, which is at present printed out by the video signal processor 21, can be monitored by each video monitor although the video terminals are not provided with the branching devices.

Inasmuch as the video terminal, upon reception of the selection command, according to the first embodiment, supplies the video signal through the video amplifier to the video processor, the video terminal can be extended without incurring any deterioration of the quality of the video signal. Furthermore, the video signal supplied from the video terminal controller can be branched into the video signal processor and the video monitor without providing the branching device.

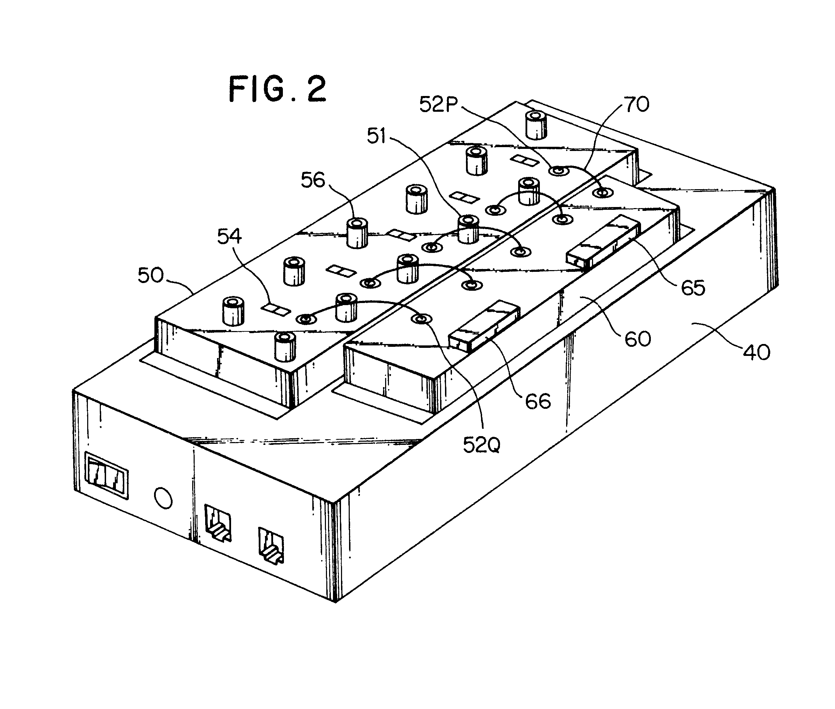

A video terminal switching device and a video signal branching device according to a second embodiment of the present invention will be described with reference to Figs. 2 to 4.

In Fig. 2, designated at 40 is a case for housing a power source circuit and a control circuit of a video hard copy device, 50 is a basic circuit unit and 60 is an option circuit unit.

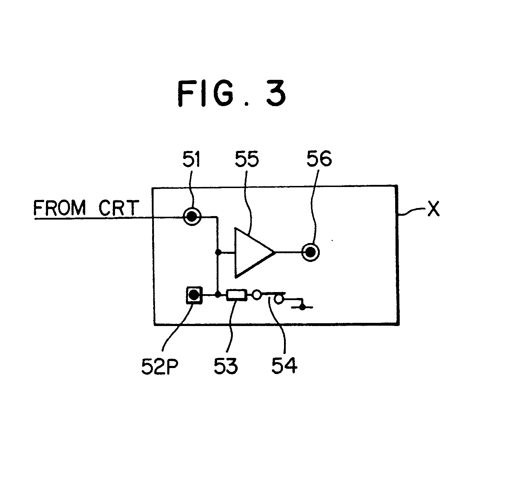

The basic circuit unit 50 has, as illustrated in Fig. 3, a basic module X which is composed of five signals, i.e. a red signal, a green signal, a blue signal, a horizontal synchronous signal and a vertical synchronous signal.

The basic module X comprises an input circuit composed of a BNC connector 51, a connector 52P (a high frequency connector) for connecting the module thereto, the BNC connector 51 and the connector 52P being positioned on the same signal line, a terminal resistor 53 which is terminated on the same signal line (e.g. having resistivity of 75 ohms), a switch 54 to be ON or OFF for preventing a reflective signal from generating at the input terminal of the CRT display and an output circuit composed of an amplifier 55 and a BNC connector 56 for connecting to the amplifier 55. The amplifier 55 serves as a compensator. The BNC connector 56 is connected to a video hard copy device etc., not shown, for supplying an output of the amplifier 55 to the video hard copy device.

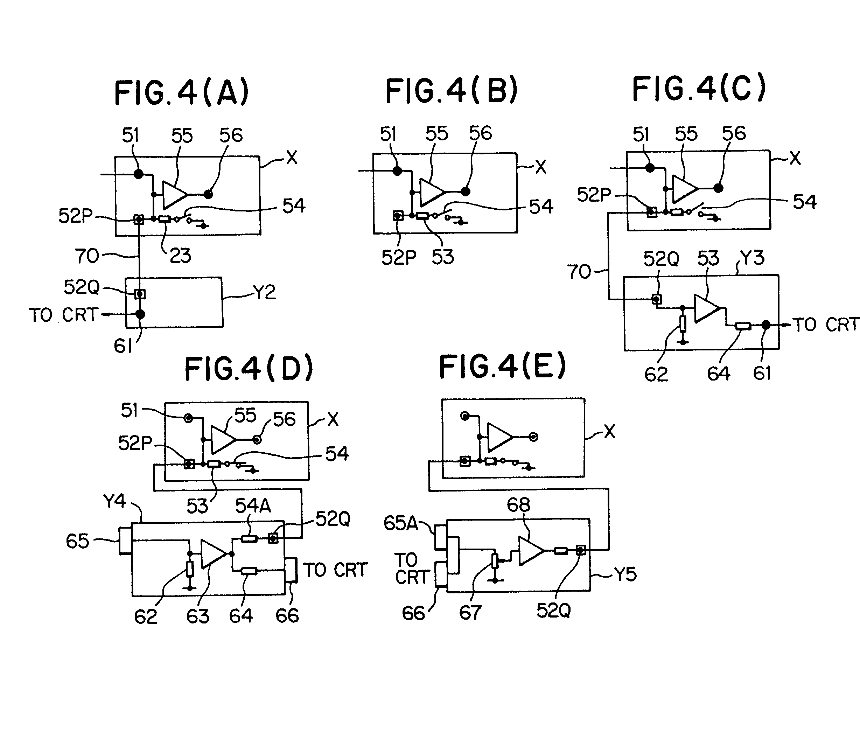

The option circuit unit 60 houses option modules as illustrated in Figs. 4(A), and 4(C) to 4(E). In Fig. 4(A), an option module Y2 has a connector 52Q (high frequency connector) for connecting to the module and an output connector 61 (a BNC connector) for connecting to the CRT display in which the connector 52Q is connected to the connector 52P of the basic module A by way of a connecting cable 70.

The video signal branching circuit in Fig. 4(A) is used for branching the video signal, which is supplied from the video controller 5, etc. as illustrated in Fig. 7 to the non-reflective CRT display through the transmission cable (coaxial cable), into the video hard copy device, etc. The basic module X closes the switch 54 to permit thereof to be high impedance.

An option module Y3, as illustrated in Fig. 4(C), comprises a video buffer circuit composed of a resistor 62, an amplifier 63 and a resistor 64 between the connector 52Q and the output connector 61.

The video signal branching circuit as illustrated in Fig. 4(C) employs a reflective CRT display in which the switch 54 is closed.

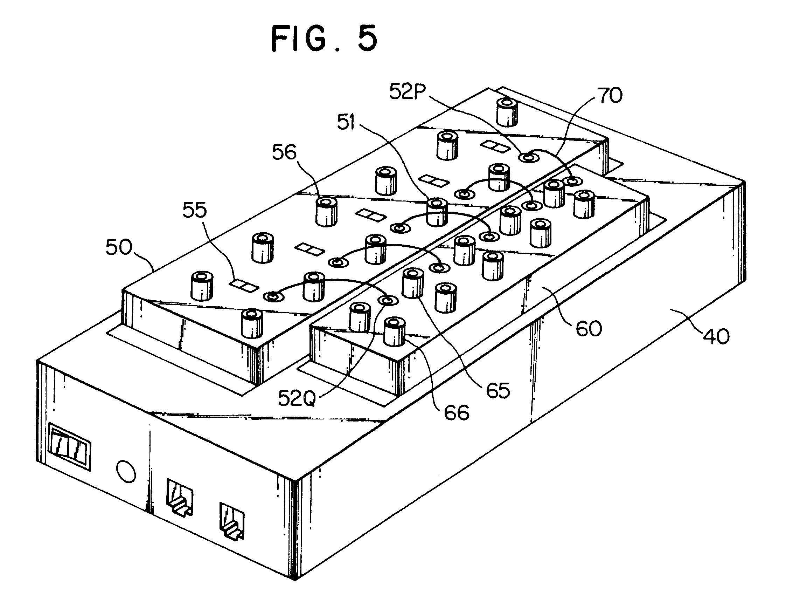

An option module Y4, as illustrated in Fig. 4(D), comprises an input connector 65, which is different from the BNC connector, and output connector 66 for connecting to the CRT display and also comprises a video buffer circuit composed of the resistor 62, the amplifier 63, the resistors 64 and 64A between the input and output connectors 65 and 66. Fig. 5 shows the option circuit unit 60 provided with the option module Y4.

The video signal branching circuit in Fig. 5 is employed in the case that the output connector of the video terminal and the input connector of the CRT display are different from the BNC type connector in which the video signal can be supplied by the coaxial cable under a high impedance. In this arrangement, the input connector 65 is the same as the output connector of the video terminal while the output connector of the CRT display is the same as the connector 66 of the input connector of the CRT display.

An option module Y5, as illustrated in Fig. 4(E), comprises an input connector 65A which is different from the BNC connector and an output connector 66A for connecting to the CRT display and further comprises a level conversion circuit composed of an amplifier 68 provided with an attenuator 67 between both the input and output connectors 65A and 66A.

The arrangement of the option module Y5 in Fig. 4(E) is employed in the case that the video signal is the one other than the analog level (TTL level, etc.).

In case that the video signal is not necessary to branch into the CRT display, the option circuit unit 60 is not employed, only the basic module X is employed.

As mentioned above, according to the second embodiment, the basic module is provided with the connectors for receiving the video signal, for branching the signal, for connecting to the module, and further provided with compensation function enabling the basic module to cope with the generation of reflective signal at the input terminal and to transmit the video signal for a long distance. That is, the option module is basically provided with the connector for connecting to the module, the output connector thereof for connecting to the CRT display and the circuit for coping with the difference of the type of signal (difference of the connector, impedances, the signal levels). Accordingly, it is possible to manufacture the option module specification of which responds to the different kind of signal and capable of branching every kind of signal without deteriorating the quality thereof.

With the arrangement of the basic module according to the standard video signal can be received and branched through the BNC connector, generation of the reflective wave signal is prevented and long distance transmittance of the video signal is achieved while the arrangement of the option module copes with the difference of the signals (difference in the connectors, the connectors, the impedance, the signal levels) so that the video signal to be supplied to the CRT display can be easily branched without deteriorating the quality thereof since the option module, in response to the types of the signal, can be manufactured with ease.

The features disclosed in the foregoing description, in the claims and/or in the accompanying drawings may, both separately and in any combination thereof, be material for realising the invention in diverse forms thereof.

**Claims**

1. A video terminal switching device in a plurality of video terminals (VT1, VT2) which are serially connected to each other and each comprising terminal controllers (22, 24), video monitors (23, 25), switching devices composed of selector switches (26, 28), transmit-receive circuits (33, 34) and a video signal processor (21) wherein the controllers (22, 24) issue a video signal, the selector switches (26, 28) can select, upon reception of a command signal issued by the video signal processor (21) the video signal issued by a self terminal (VT1, VT2) is relayed to be issued by the controllers (22, 24) in self video terminals (VT1, VT2) or a video signal issued by controllers in non-self downstream video terminals and relay the selected video signal to upstream video terminals (VT) and the transmit-receive circuits (33, 34) receive and send the command signal from the video signal processor (31) for switching the selector switches (26, 28), characterized in that the video terminal further comprises video amplifier (27, 29) connectors to output terminals of the terminal controllers (22, 24) and each having transmission compensation function, the video signal issued by the terminal controllers (22, 24) are relayed to the upstream video terminals by way of the video amplifiers (27, 29) and the selector switches (26, 28) and the video monitors (23, 25) are connected to the output terminals of the terminal controllers (22, 24).

2. A video signal branching device in a video terminal for branching a video signal, which is to be transmitted to a CRT display, into another device, the video signal branching device comprising a basic circuit unit (50) composed of a plurality of basic modules (X) and an option circuit unit (60) comprising a plurality of option modules (Y2 to Y5), characterized in that the basic module (X) comprises an input circuit composed of one input connector (51), one module connecting connector (52P) to be connected to the input connector (51), a terminal resistor (53) and a switch (54) to be ON or OFF to prevent the reflective signal from generating at the input terminal of the CRT display, and a branching output circuit composed of an amplifier (55) having a cable compensation function and one outputting connector (56) for outputting an amplified signal, and the option module composed of a module connecting connector (70) capable of connecting the module connecting connector (52Q) of the input circuit to an outputting connector (61) for connecting to the CRT display.

3. A video signal branching device according to Claim 2, wherein the option module further comprises an impedance converting circuit or a level converting circuit between the module connecting connector and the outputting connector for connecting to the CRT display.

4. A video signal branching device according to Claim 3, wherein the option module further comprises an inputting connector, which is the same kind as the outputting connector for connecting to the CRT display, but different from the inputting connector of the basic module.

5. A video signal branching device according to Claim 4, wherein the inputting connector and the outputting connector for connecting to the CRT display are directly connected and an amplifier provided with an attenuator is interposed between the inputting connector, the outputting connector for connecting to the CRT display and the module connecting connector.

6. A video signal branching device comprising the basic module alone which is not connected to an option module.

## FIG. 1

FIG.2

# FIG. 3

FROM CRT

51 55 56 X

52P 53 54

# FIG.4(A)

# FIG.4(B)

# FIG.4(C)

# FIG.4(D)

# FIG.4(E)

FIG. 5

# FIG. 6 (PRIOR ART)

## FIG.7 (PRIOR ART)